(19) Europäisches Patentamt
European Patent Office
Office européen des brevets

(11) **EP 2 723 029 A1**

(12) **EUROPEAN PATENT APPLICATION**

(43) Date of publication:
**23.04.2014 Bulletin 2014/17**

(51) Int Cl.:
*H04L 27/06* *(2006.01)*

(21) Application number: **12188712.9**

(22) Date of filing: **16.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NXP B.V.**
**5656 AG Eindhoven (NL)**

(72) Inventor: **Phadtare, Milind**
**Redhill**
**Surrey RH1 1NY (GB)**

(74) Representative: **Miles, John Richard et al**
**NXP B.V.**
**Intellectual Property & Licensing**
**Red Central**
**60 High Street**
**Redhill, Surrey RH1 1SH (GB)**

(54) **On-off-keying modulated signal receiver**

(57)     An on-off-keying, OOK, modulated signal receiver for recovering data from an OOK modulated signal is presented. The receiver comprises: a receiver unit adapted to receive an OOK modulated signal; a sampling unit adapted to sample the received OOK modulated signal at a sampling frequency less than two times the highest frequency of the received OOK modulated signal; and a signal processing unit adapted to process the sampled signal in accordance with a predetermined algorithm so as to recover data from the sampled signal.

Fig. 4

EP 2 723 029 A1

Printed by Jouve, 75001 PARIS (FR)

**Description**

FIELD OF THE INVENTION

This invention relates to the field of communications, and more particular to receiving on-off keying modulated communication signals

BACKGROUND

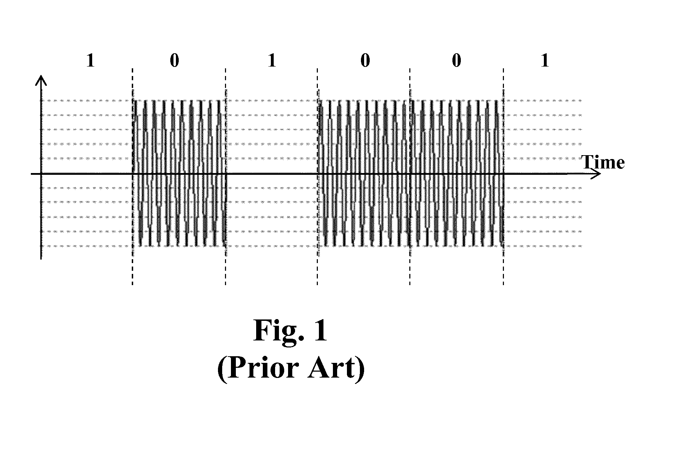

On-Off Keying (OOK) modulation is typically used for a low bitrate and low complexity data communication. The concept of OOK modulation is illustrated in Figure 1, which show the amplitude variation of an OOK modulated signal (carrying digital data) against time. Here, a digital '0' is represented via the presence of a carrier signal, and a digital '1' is represented via the absence of a carrier signal. Thus, is will be understood that the digital data carried by the OOK modulated signal shown in Figure 1 comprises a bit pattern of "101001".

OOK modulation is commonly used in variety of applications requiring low bitrate and low complexity, such as for Remote Electrical Tilt of mobile tower antennas from a base station for example.

The carrier frequency is dependent on the channel used in the application. By way of example, typical carrier frequencies of a few MHz are used for the transmission of OOK modulated signal over Radio Frequency (RF) feeder cable (e.g. carrier frequencies of 2.176 MHz and 4.352 MHz are commonly used for OOK modulation on an RF feeder cable).

Such carrier frequencies therefore require an OOK modulated signal receiver (otherwise referred to more simply as an OOK receiver) to employ a complex Digital Signal Processing (DSP) system which operates at a high frequency. This results in the need to employ expensive DSP systems which consume higher power. For example, for an OOK modulated signal transmitted over RF feeder cable employing a carrier frequency of 4.352 MHz and carrying digital data with a data rate of 9.6 Kbps, the operating frequency of the DSP system of the receiver (which undertakes 20 operations per sample) will need to be 174.464 MHz, which is very high. Although the above example uses 4.352 MHz, similar calculations are also applicable for the use of a 2.176 MHz carrier frequency.

Such high operating frequency requirements also make it difficult to integrate multiple OOK receivers in a single integrated circuit.

BRIEF SUMMARY OF THE INVENTION

According to an embodiment of the invention, there is provided an OOK modulated signal receiver according to independent claim 1.

Compared to conventional approaches, embodiments reduce the sampling rate employed by the OOK receiver. In particular, embodiment may use a sub-sampling rate (i.e. a sampling rate lower than the Nyquist rate) which is selected so as to ensure aliased components are kept away from the OOK baseband data spectrum. As a result of this, embodiments may use a signal processing unit (or DSP system) which employs a low clock frequency, thus enabling a reduction in complexity of the signal processing unit. A low cost and low power OOK receiver may therefore be provided. Also, embodiments may enable more receiver channels to be in integrated onto a chip or integrated circuit.

Embodiments may thus be employed in an OOK modem, an OOK transceiver, a remote antenna tilting apparatus or a tower mounted amplifier apparatus.

According to an embodiment of the invention, there is provided a method of recovering data from an OOK modulated signal according to claim 9.

BRIEF DESCRIPTION OF THE DRAWINGS

Preferred embodiments of the present invention will now be described, by way of example only, with reference to the following drawings in which:

Figure 1 illustrates the variation of a OOK modulated signal with time;
Figure 2a illustrates the signal spectrum of an OOK modulated signal transmitted over a RF feeder cable;
Figure 2b illustrates the signal spectrum of an aliased signal that is obtained by sampling the OOK modulated signal of Figure 2a at a sampling rate of 2.0086 MHz;
Figure 3A shows the frequency spectrum of the aliased carrier obtained by sampling the OOK modulated signal of Figure 2A at a sampling rate of 2.0086 MHz;
Figure 3B shows the frequency spectrum of the aliased carrier of Figure 3A after a squaring operation;
Figure 3C illustrates the application of a low pass filter function to the frequency spectrum of Figure 3B;

Figure 3D shows the recovered baseband data signal after applying the low pass filter shown in Figure 3C;
Figure 4 is a schematic block diagram of an OOK modulated signal receiver according to an embodiment of the invention;
Figure 5 is a schematic block diagram of a DSP unit of an OOK modulated signal receiver according to an embodiment;
Figure 6 is a schematic block diagram of a DSP unit of an OOK modulated signal receiver according to another embodiment;
Figure 7 illustrates remote antenna tilting apparatus according to an embodiment of the invention.

DETAILED DESCRIPTION OF THE EMBODIMENTS

This invention proposes to reduce the sampling rate of a received OOK modulated signal, and more particularly to reduce the sampling rate to below Nyquist sample rate. In other words, to employ a sampling rate which is less than twice the highest frequency contained within the received OOK modulated signal. The received OOK modulated signal can therefore be referred to as being 'sub-sampled' (i.e. sampled at a sub-optimal rate in terms of alias-free signal sampling).

By employing a lower sampling rate (below the Nyquist rate), the complexity of a method or apparatus for receiving an OOK modulated signal can be significantly reduced. This enables OOK modulated signal reception to be implemented using DSP operating at a lower speed (e.g. with a lower clock frequency). Cost and power savings may therefore be made in a receiver implementing such a concept.

Reducing the sampling rate of the received OOK modulated signal to less than the Nyquist rate results in aliasing of the carrier frequency and its surrounding data spectrum. The aliased carrier thus appears as low frequency signal. However, by ensuring that that the carrier frequency is away from the baseband spectrum, the modulated baseband data can still be recovered despite the aliasing.

The sub-sampling rate is selected to ensure that the aliases carrier is away from the baseband.

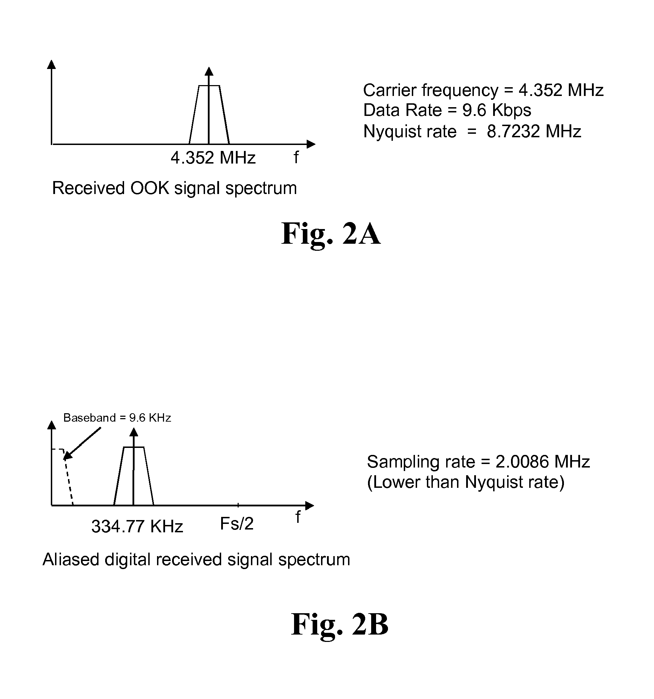

For example, Figure 2A illustrates the signal spectrum of an OOK modulated signal transmitted over an RF feeder cable. The OOK carrier frequency in this example is 4.352 MHz with a data rate of 9.6 Kbps. Thus, the Nyquist rate for this signal is 8.7232 MHz (calculated as follows: 2*(4352000+9600)).

Figure 2B illustrates the signal spectrum of the aliased signal that is obtained by sampling the OOK modulated signal of Figure 2a at a sampling rate of 2.0086 MHz. It will be appreciated that the sampling rate of 2.0086 MHz is well below the Nyquist rate of the OOK modulated signal of Figure 2A. The aliased carrier frequency is located at abs(4.352 - n*2.0086), where 'abs' is absolute value and 'n' is an integer. An 'n' value which makes the multiple of sampling rate closest to the carrier frequency should be used. In this case 'n' should be 2. Hence, the aliased carrier is located at abs(4.352 - 2*2.0086) = 0.33477 MHz (334.77 KHz). Thus, from Figure 2B, it can be seen that the frequency spectrum of the aliased carrier is separated from the baseband data spectrum (which extends to 9.6KHz).

Thus, as can be seen from Figure 2B, despite performing sampling at a rate lower than the Nyquist rate, the aliased carrier frequency is still positioned away from the baseband of 9.6 KHz in the frequency domain. DSP algorithms can then be applied on this signal to recover the modulated baseband data.

The sub-sampling rate is selected such that the aliased carrier frequency (as calculated above) is away from the baseband. Although this example uses 2.0086 MHz of sub-sampling rate, same effect can also be achieved by other appropriately selected sampling rates.

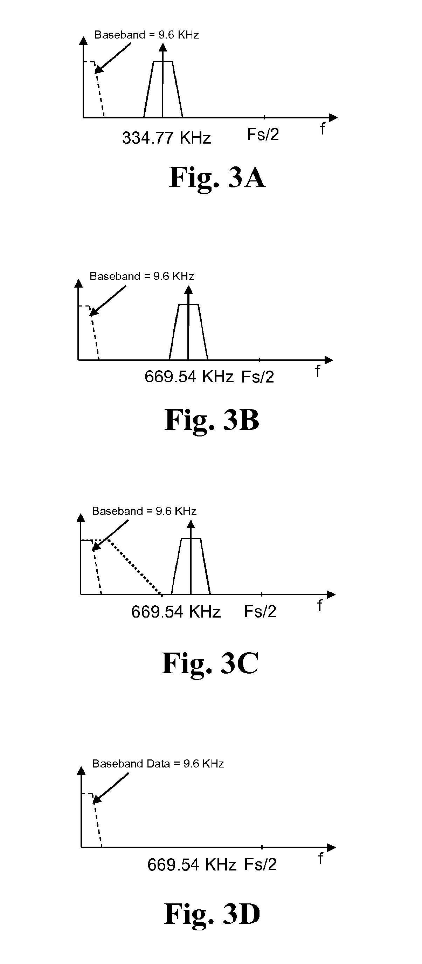

As will now be demonstrated with reference to Figures 3A-3D, one such exemplary algorithm comprises applying a squaring function to each received sample followed by a low pass filtering.

Figure 3A shows the frequency spectrum of the aliased carrier obtained by sampling the OOK modulated signal of Figure 2A at a sampling rate of 2.0086 MHz. As has already been calculated above, the frequency spectrum of the aliased carrier is centred at 334.77 KHz.

After squaring the samples, the frequency spectrum of the aliased carrier will be further away from the baseband data spectrum as shown in Figure 3B. Here, the centre of the frequency spectrum of the aliased carrier is moved to 669.54.77 KHz (i.e. it is doubled by the squaring function).

As illustrated in Figure 3C, a low pass filter function (having a cut-off frequency less than the lowest frequency of the aliased carrier) can then be applied to only pass the baseband data spectrum and filter out the aliased carrier frequency.

As a result of the low pass filtering, the baseband data signal remains (as illustrated in Figure 3D.

The squaring and filtering operations described above are applied to each sample. Such operations may, for example, require 20 clock cycles to be performed by signal processing apparatus. Accordingly, if these operations are performed on a signal obtained at a sampling rate of 2.0086 MHz, the signal processing apparatus is required to operate at a frequency of 40.172 MHz (calculated as follows: 20*2.0086 MHz). This is substantially lower than the clock frequency requirement of 174.464 MHz for a conventional approach employing a signal sampling rate equal to the Nyquist rate.

The lower operating frequency saves cost and power in apparatus employing the proposed concept of sub-

sampling a received OOK modulated signal.

An alternative exemplary algorithm comprises applying a Hilbert transform to the samples (at a rate less than the Nyquist rate), wherein a Hilbert transform essentially converts sin to cos. If the sampled signal is x(n), this application of a Hilbert transform results in a Hilbert transformed signal xh(n) represented by Equation 1:

$$xh(n) = \text{Hilbert transform } \{ \ x(n) \ \} \qquad (1).$$

An analytical signal (complex numbers) y(n) is then formed using the sampled signal x(n) and the Hilbert transformed signal xh(n) as represented by Equation 2:

$$y(n) = x(n) + j*xh(n) \qquad (2).$$

Thus, an analytical (complex) signal y(n) is obtained when the Real part of y(n) is the sampled signal and the complex part of y(n) is the Hilbert transformed signal.

The magnitude of the analytical signal then provides the recovered baseband data z(n). This can be represented by Equation 3:

$$z(n) = \left| \ y(n) \ \right| = \sqrt{x(n)^2 + xh(n)^2} \qquad (3)$$

In summary, such an alternative algorithm comprises applying a Hilbert transform to the sampled signal, generating a complex analytical signal having a real part equal to the sampled signal and an imaginary part equal to the Hilbert transformed signal, and performing magnitude calculation on the analytical signal so as to recover the data.

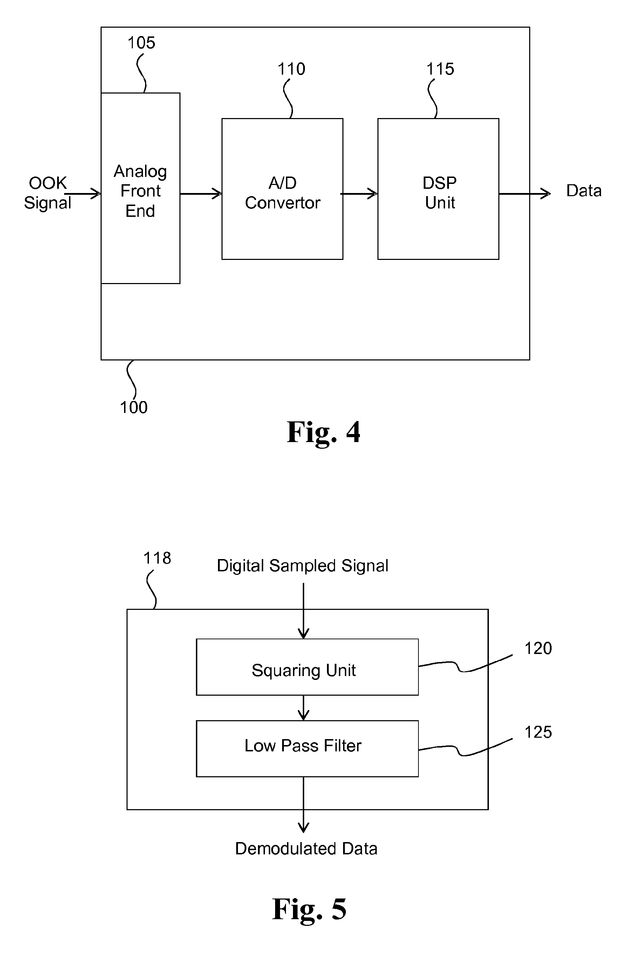

Referring now to Figure 4, there is shown a schematic block diagram of an OOK modulated signal receiver 100 (otherwise referred to as an OOK receiver 100) according to an embodiment of the invention.

The OOK receiver 100 comprises an analog front end 105, an analog-to-digital (A/D) convertor 110, and a DSP unit 115.

The analog front end 105 is adapted to receive an OOK modulated signal transmitted via an RF feeder cable. Then analog front end 105 provides the received analog OOK modulated signal to the A/D convertor 110, which as adapted to convert the analog OOK modulated signal to a digital signal. More specifically, the A/D convertor 110 converts the signal to a digital signal by performing time domain sampling on the received analog OOK modulated signal at a sampling rate which is less than the Nyquist rate of the received analog OOK modulated signal. Each sample is converted to a digital format by representing the sampled value of the OOK modulated signal as a digital value.

The digital signal obtained by the A/D convertor 110 is passed to the DSP unit 115. The DSP unit processes the digital signal in accordance with a predetermined algorithm so as to recover data from the sampled signal.

To demonstrate an example of how the DSP unit processes the digital signal to recover data, exemplary components of a DSP unit according to an embodiment are illustrated in Figure 5. Here, the DSP unit 118 comprises a squaring unit 120 and a low pass filter 125.

A digital signal obtained by an A/D convertor of an OOK receiver according to an embodiment is passed to the squaring unit 120 of DSP unit 118. The squaring unit performs a squaring operation on each digital sample, thus moving the frequency spectrum of the aliased carrier further away from the baseband data spectrum (as has been shown in Figure 3B). After performing the squaring operation, the digital signal is provided from the squaring unit 120 to the low pass filter 125. The low pass filter 125 which applies a low pass filter function (having a cut-off frequency less than the lowest frequency of the aliased carrier) to the digital signal. In this way, the low pass filter 125 only passes the baseband data spectrum and filter out the aliased carrier frequency. The demodulated data is then output by the low pass filter 125.

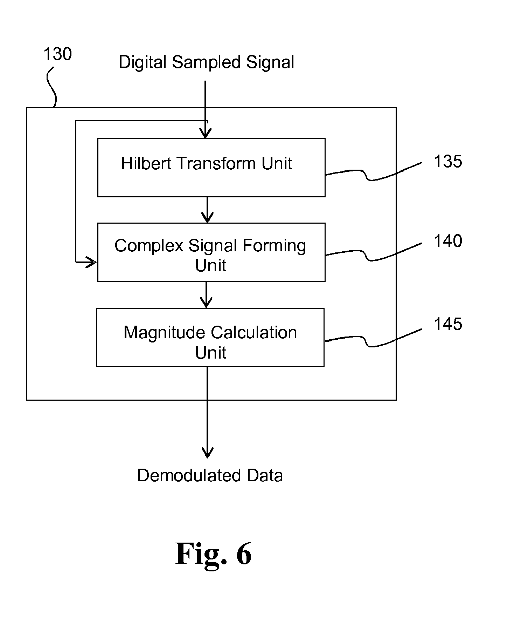

Exemplary components of a DSP unit according to another embodiment are illustrated in Figure 6. Here, the DSP unit 130 comprises a Hilbert transform unit 135, a complex signal forming unit 140 and magnitude calculation unit 145.

A digital signal obtained by an A/D convertor of an OOK receiver according to an embodiment is passed to the Hilbert transform unit 135 and the complex signal forming unit 140 of the DSP unit 130. The Hilbert transform unit 135 performs a Hilbert transform operation on each digital sample, thus forming a Hilbert transformed signal. The Hilbert transformed signal is provided to the complex signal forming unit 140. The complex signal forming unit 140 forms a complex analytical signal using the sampled digital signal from the OOK receiver and the Hilbert transformed signal. Here, the complex analytical signal is formed by making the Real part of y(n) equal to the sampled digital signal from the OOK receiver and the complex part equal to the Hilbert transformed signal. The complex analytical signal is then passed from the complex signal forming unit 140 to the magnitude calculation unit 145.

The magnitude calculation unit 145 calculates a magnitude of the complex analytical signal to recover/demodulate the data. The demodulated data is then output by the magnitude calculation unit 145.

One particular application for OOK modulated signals is communication with a mobile tower antenna to remotely tilt the antenna. Tilting of mobile antennas is necessary for optimized coverage. The OOK-based communication is used for sending control commands to antenna, wherein the same RF coax cable as used by the Base Station to communicate with the antenna is also used to communicate the OOK-based control commands.

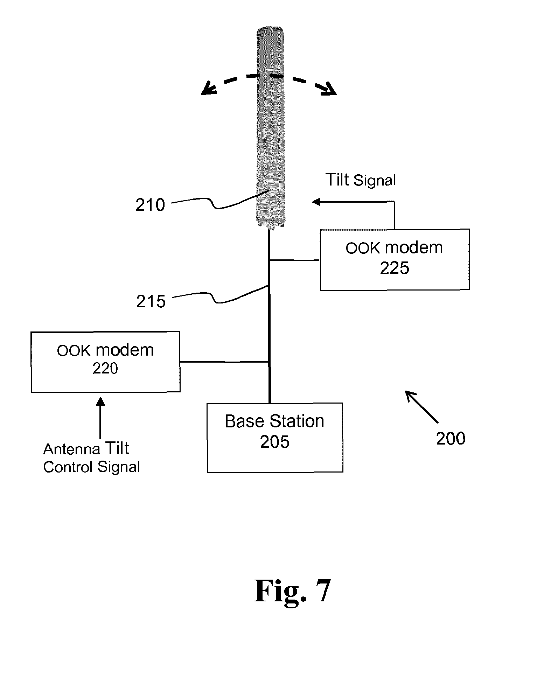

Remote antenna tilting apparatus 200 according to an embodiment of the invention is illustrated in Figure 7. As explained above, a base station 205 communicates with an antenna 210 via a RF coax cable 215. The antenna 210 comprises tilting apparatus (not shown) which is adapted to tilt the antenna (i.e. varying its angle and/or orientation) based on a received tilt signal.

First 220 and second 225 OOK modems (or transceivers) are situated at opposite ends of the RF coax cable (i.e. near the base station 205 and near the antenna 210). The second OOK modem comprises an OOK receiver according to the embodiment described above with reference to Figures 4 and 5.

Based on a received antenna tilt control signal, the first OOK modem 220 (situated near the base station 205) sends tilt commands over the RF coax cable using OOK modulation, and the second OOK modem 225 (situated near the antenna 210) receives the commands. The received OOK-modulated commands are demodulated to recover the tilt commands and, based on the commands, a tilt signal is applied to the tilting apparatus of the antenna 210 to control is angle and/or orientation.

By employing a receiver according to an embodiment of the invention, the second OOK modem 225 (and more particularly, the A/D convertor) employs a lower sampling rate than the Nyquist rate. Thus, the operating speed and complexity of the DSP unit is lower than that of a convention OOK modem. Cost and power savings may therefore be made in the second OOK modem 225. Similar cost and power saving can also be made in the first modem 210 for received OOK modulated signals from second modem 225 for receiving feedback on tilt operation.

The proposed concept reduces complexity of implementing an OOK receiver, thereby reducing cost and power requirements of an Integrated Circuit (IC) employing the receiver.

Embodiments may be captured in a computer program product for execution on a processor of a computer, e.g. a personal computer or a network server, where the computer program product, if executed on the computer, causes the computer to implement the steps of a method according to an embodiment. Since implementation of these steps into a computer program product requires routine skill only for a skilled person, such an implementation will not be discussed in further detail for reasons of brevity only.

In an embodiment, the computer program product is stored on a computer-readable medium. Any suitable computer-readable medium, e.g. a CD-ROM, DVD, USB stick, memory card, network-area storage device, internet-accessible data repository, and so on, may be considered.

Other variations to the disclosed embodiments can be understood and effected by those skilled in the art in practising the claimed invention, from a study of the drawings, the disclosure, and the appended claims. For example, although an embodiment described above employs a carrier frequency of 4.352 MHz, embodiments may be used in conjunction with other carrier frequencies, such as the known carrier frequency of 2.176 MHz for transmission of an OOK modulated signal over RF feeder cable for example.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

**1.** An on-off-keying, OOK, modulated signal receiver for recovering data from an OOK modulated signal, the receiver comprising:

 a receiver unit (105) adapted to receive an OOK modulated signal;
 a sampling unit (110) adapted to sample the received OOK modulated signal at a sampling frequency less than two times the highest frequency of the received OOK modulated signal; and

a signal processing unit (115) adapted to process the sampled signal in accordance with a predetermined algorithm so as to recover data from the sampled signal.

2.   The receiver of claim 1, wherein the OOK modulated signal comprises data indicated by a carrier signal which is on/off-modulated at a data rate frequency in accordance with the data,
and wherein the highest frequency of the received OOK modulated signal is equal to the frequency of the carrier signal plus the data rate frequency.

3.   The receiver of claim 1, wherein the signal processing unit (115) is adapted to apply a squaring function to the sub-sampled signal so as to generate a squared signal, and to low pass filter function to the squared signal so as to recover the data.

4.   The receiver of claim 1 or 2, wherein the signal processing unit (115) is adapted to apply a Hilbert transform to the sampled signal so as to generate a Hilbert transformed signal, to generate a complex signal from the sampled signal and the Hilbert transformed signal, and to calculate the magnitude of the complex signal so as to recover the data.

5.   The receiver of claim 4, wherein the real part of the complex signal is equal to the sampled signal and the complex part of the complex signal is equal to the Hilbert transformed signal.

6.   The receiver of any preceding claim, wherein the sampling frequency is selected such that the frequency spectrum of aliased components is separated from the baseband data spectrum.

7.   Remote antenna tilting apparatus comprising an OOK modulated signal receiver according to any of claim 1 to 6.

8.   An OOK modem comprising an OOK modulated signal receiver according to any of claim 1 to 6.

9.   A method of recovering data from a received OOK modulated signal, the method comprising the steps of:

sampling the received OOK modulated signal at a frequency less than two times the highest frequency of the received OOK modulated signal; and
processing the sampled signal in accordance with a predetermined algorithm so as to recover data from the sampled signal.

10.   The method of claim 9, wherein the OOK modulated signal comprises data indicated by a carrier signal which is on/off-modulated at a data rate frequency in accordance with the data,
and wherein the highest frequency of the received OOK modulated signal is equal to the frequency of the carrier signal plus the data rate frequency.

11.   The method of claim 9 or 10, wherein the step of processing the sampled signal comprises:

squaring the sub-sampled signal so as to generate a squared signal; and
and low pass filtering the squared signal so as to recover the data.

12.   The method of claim 9 or 10, wherein the step of processing the sampled signal comprises:

applying a Hilbert transform to the sampled signal so as to generate a Hilbert transformed signal;
generating a complex signal from the sampled signal and the Hilbert transformed signal; and
calculating the magnitude of the complex signal so as to recover the data.

13.   The method of claim 12, wherein the real part of the complex signal is equal to the sampled signal and the complex part of the complex signal is equal to the Hilbert transformed signal.

14.   A remote antenna tilting method comprising:

receiving an OOK modulated signal comprising data for tilting an antenna; and
recovering data from the OOK modulated signal according to any of claims 9 to 13.

**15.** A computer program product for recovering data from an OOK modulated signal, the computer program product comprising a computer-readable storage medium having computer-readable program code embodied therewith, the computer-readable program code configured to perform all of the steps of any of claims 9 to 13.

**Fig. 1**
**(Prior Art)**

Carrier frequency = 4.352 MHz
Data Rate = 9.6 Kbps
Nyquist rate = 8.7232 MHz

4.352 MHz    f

Received OOK signal spectrum

# Fig. 2A

Baseband = 9.6 KHz

Sampling rate = 2.0086 MHz
(Lower than Nyquist rate)

334.77 KHz    Fs/2    f

Aliased digital received signal spectrum

# Fig. 2B

Baseband = 9.6 KHz

334.77 KHz     Fs/2    f

## Fig. 3A

Baseband = 9.6 KHz

669.54 KHz   Fs/2   f

## Fig. 3B

Baseband = 9.6 KHz

669.54 KHz     Fs/2   f

## Fig. 3C

Baseband Data = 9.6 KHz

669.54 KHz   Fs/2   f

## Fig. 3D

105

OOK
Signal → | Analog
Front
End | → | A/D
Convertor | → | DSP
Unit | → Data

110

115

100

**Fig. 4**

118

Digital Sampled Signal

↓

| Squaring Unit | 120

↓

| Low Pass Filter | 125

↓

Demodulated Data

**Fig. 5**

130

Digital Sampled Signal

Hilbert Transform Unit — 135

Complex Signal Forming Unit — 140

Magnitude Calculation Unit — 145

Demodulated Data

# Fig. 6

210

Tilt Signal

OOK modem
225

215

OOK modem
220

Antenna Tilt
Control Signal

Base Station
205

200

**Fig. 7**

# EP 2 723 029 A1

Europäisches Patentamt
European Patent Office
Office européen des brevets

## EUROPEAN SEARCH REPORT

Application Number

EP 12 18 8712

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHAN CUI ET AL: "Pseudocoherent Detection of OOK/PPM Signals as Zero-Delay Transmitted-Reference Signals With Bandpass Downsampling for UWB Communications", IEEE TRANSACTIONS ON VEHICULAR TECHNOLOGY, IEEE SERVICE CENTER, PISCATAWAY, NJ, US, vol. 58, no. 8, 1 October 2009 (2009-10-01), pages 4141-4148, XP011268392, ISSN: 0018-9545, DOI: 10.1109/TVT.2009.2021269 * abstract * * page 4142, left-hand column, paragraph 2 * * page 4143, left-hand column, paragraph 2 - page 4144, left-hand column, paragraph 3 * ----- | 1-15 | INV. H04L27/06 |
| X | GUVENC I ET AL: "On the transceiver types of IR-UWB systems at sub-Nyquist sampling rates", WIRELESS PERSONAL COMMUNICATIONS, vol. 46, no. 3, August 2008 (2008-08), pages 329-350, XP002692474, SPRINGER NETHERLANDS NETHERLANDS ISSN: 0929-6212, DOI: 10.1007/S11277-007-9437-2 * abstract * * first paragraph, last two sentences; page 330 * * page 332, paragraph 1 * * section 3.1, first paragraph; page 335 * * section 4.1 * ----- -/-- | 1-15 | TECHNICAL FIELDS SEARCHED (IPC) H04L |

The present search report has been drawn up for all claims

| Place of search | Date of completion of the search | Examiner |
|---|---|---|
| The Hague | 20 February 2013 | Koukourlis, Sotirios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 12 18 8712

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAUB H ET AL: "PRINCIPLES OF COMMUNICATION SYSTEMS, PASSAGE", 1 January 1991 (1991-01-01), PRINCIPLES OF COMMUNICATION SYSTEMS, NEW YORK, MCGRAW HILL, US, PAGE(S) 188 - 192, XP002029535, ISBN: 978-0-07-062955-4 * the whole document * | 1-15 | |
| X | VAUGHAN R G ET AL: "The theory of bandpass sampling", IEEE TRANSACTIONS ON SIGNAL PROCESSING USA, vol. 39, no. 9, September 1991 (1991-09), pages 1973-1984, XP002692475, ISSN: 1053-587X, DOI: 10.1109/78.134430 * the whole document * | 1-15 | |
| A | TAUB H ET AL: "Principles of Communication Systems, Amplitude-Modulation Systems", 1 January 1986 (1986-01-01), PRINCIPLES OF COMMUNICATION SYSTEMS, NEW YORK, MCGRAW HILL, US, PAGE(S) 113 - 120, XP002531747, ISBN: 978-0-07-062955-4 * page 119; figures 3.3-1 * | 3,11 | TECHNICAL FIELDS SEARCHED (IPC) |
| A | RICE D W ET AL: "QUADRATURE SAMPLING WITH HIGH DYNAMIC RANGE", IEEE TRANSACTIONS ON AEROSPACE AND ELECTRONIC SYSTEMS, IEEE SERVICE CENTER, PISCATAWAY, NJ, US, vol. AES-18, no. 4, 1 November 1982 (1982-11-01), pages 736-739, XP000670457, ISSN: 0018-9251 * abstract * * page 736, right-hand column, last paragraph * | 4,5,12,13 | |

-/--

The present search report has been drawn up for all claims

| Place of search | Date of completion of the search | Examiner |
|---|---|---|
| The Hague | 20 February 2013 | Koukourlis, Sotirios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 12 18 8712

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROSENKRANZ W: "QUADRATURE SAMPLING OF FM-BANDPASS SIGNALS - IMPLEMENTATION AND ERROR ANALYSIS", DIGITAL SIGNAL PROCESSING. PROCEEDINGS OF THE INTERNATIONALCONFERENCE, XX, XX, 7 September 1987 (1987-09-07), pages 377-381, XP000670954, * abstract * * Section 2 * ----- | 4,5,12, 13 | |

TECHNICAL FIELDS
SEARCHED      (IPC)

The present search report has been drawn up for all claims

| Place of search | Date of completion of the search | Examiner |
|---|---|---|
| The Hague | 20 February 2013 | Koukourlis, Sotirios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)